# EUROPEAN PATENT SPECIFICATION

(11) **EP 1 829 017 B1**
(45) Date of publication and mention of the grant of the patent: **08.02.2012**
(21) Application number: 05825854.2
(22) Date of filing: 10.11.2005
(51) Int. Cl.: G09F 3/04, B32B 27/32, C08L 23/08, C09J 123/08, B29C 47/06, B29C 70/78, B29C 55/02, B29C 44/12, B65D 23/08

(54) **IN-MOLD LABELS AND USES THEREOF**
FORMINTERNE LABEL UND VERWENDUNG DAFÜR
ETIQUETTES SURMOULEES ET LEURS UTILISATIONS

(30) Priority: 10.11.2004 US 626626 P
(43) Date of publication of application: 05.09.2007
(73) Proprietor: AVERY DENNISON CORPORATION, Pasadena, CA 91103 (US)
(72) Inventor: BLACKWELL, Christopher, J., Solon, Ohio 44139 (US); KOVALCHUK, John, E., Painesville, Ohio 44077 (US)
(74) Representative: Brouwer, Hendrik Rogier
(86) International application number: PCT/US2005/041080
(87) International publication number: WO 2006/053267

(56) References cited:
- EP-A- 0 254 923
- EP-A- 0 787 581
- WO-A-01/07234
- DE-A1- 4 306 103
- US-A- 5 000 992
- US-A- 5 332 542
- US-A- 6 150 013
- US-A1- 2004 146 699
- PATENT ABSTRACTS OF JAPAN vol. 009, no. 166 (C-290), 11 July 1985 (1985-07-11) & JP 60 036549 A (SHOWA DENKO KK), 25 February 1985 (1985-02-25)

## Description

### TECHNICAL FIELD

This invention relates to in-mold labels for plastic substrates. In particular, the invention relates to in-mold label films having improved handleability in processing during and subsequent to film manufacture.

### BACKGROUND

In-mold labeling has significant advantages over methods commonly used in the past to label plastic containers with polymeric labels. The most common of these previous methods involves the use of liner-carried pressure sensitive adhesive labels, or liner carried heat activatable adhesive labels. To produce the liner carried labels, a laminating step is performed to sandwich a layer of adhesive between a web of label stock and a web of silicone-coated paper which is to function as a carrier or release liner. The label stock is printed and the ink is dried by heating elements or ultraviolet radiation. Separate labels are cut from the label stock by passing the combination through a rotary-die or flat-bed cutting station. The matrix of waste or trim label stock surrounding the labels is stripped and discarded or recycled. Use of these types of methods results in high costs due to the use of a release liner, and the ecological difficulties in disposing of the liner and the trim.

In contrast, in-mold labeling avoids the use of any release liner or carrier. During in-mold labeling with polymeric labels, self-supported or free-film polymeric label stock may be combined with a heat-activatable adhesive or may have a heat-activatable heat seal layer. The polymeric label stock is printed, die-cut, and then arranged for deployment, as by being magazine-loaded as a series or stack of linerless labels, or by other means. The polymeric labels are then sequentially deployed on the molding surface of a blow mold to be bonded onto successive hot plastic substrates or containers. The blow molded parisons are expanded against the molding surface and the in-mold label activates and bonds the heat-activatable adhesive or heat seal layer to the blown plastic substrate or container.

The in-mold label film can fail to completely bond with a plastic substrate during the in-mold labeling process resulting in a labeled plastic article having blisters. The blisters can be a result of incomplete or nonuniform activation of the adhesive or heat seal layer. The activation temperature of the adhesive or heat seal layer can affect the ability of the in-mold label film to effectively bond with the plastic substrate and generally needs to be sufficiently uniform and low for effective bonding.

Further, a stack of labels under pressure from the tension springs of the in-mold label insertion equipment or by their own weight pushes out any air between the film labels. This increases the adhesion between the labels, causing the film labels to stick together, creating double picks and/or dropped labels. Additionally, the heat seal layer may be slightly tacky, causing the labels to stick together. Slip agents are often used to overcome this problem. However, the slip agents have a tendency to bloom, resulting in printing problems.

In addition, roll fed sheeters desire to sheet two or more reels at a time. When two reels are sheeted, the industry term used is sheeting "two up". A chevron roll is used between the two rolls. When pressures of up to 60 psi are applied, slip agent can transfer from the heat seal or adhesive surface of the film to the print surface of the film. The pattern of the chevron roll is seen in printed media as a result of the slip agent transfer. Even if only one roll is sheeted, slip agent transfer can still occur.

It is desirable to obtain an in-mold label film that solves one or more of the above problems. Specifically, it is desirable to produce an in-mold label that prevents double picks during the placement process, yet that bonds sufficiently to the plastic substrate.

The in-mold label film of the present invention eliminates or reduces at least some of the problems indicated hereinabove. The inventive film has a heat seal layer that combines a reduced coefficient of friction and a sufficiently uniform and low activation temperature which provides both improved handleability while maintaining effective bonding to a plastic substrate. The inventive film can provide this handling and bonding performance without the use of an embossed surface and without the addition of slip agents, however, adding slip agents to and/or embossing the inventive film are within the scope of the invention.

### SUMMARY

The present invention relates to an in-mold label film comprising a core layer and a heat seal layer, wherein the core layer has a first and second surface and the heat seal layer has an inner surface and an outer surface with the inner surface of the heat seal layer overlying the first surface of the core layer, and the heat seal layer comprises a high density polyethylene and a very low density polyethylene.

In another aspect of the invention, a labeled plastic article comprises the inventive in-mold label film.

In still another aspect of this invention, a method for in-mold labeling comprises providing an in-mold label film comprising a core layer and a heat seal layer, wherein the core layer has a first and second surface and the heat seal layer has an inner surface and an outer surface with the inner surface of the heat seal layer overlying the first surface of the core layer, and the heat seal layer comprises a very low density polyethylene and a high density polyethylene; inserting the film into a mold for producing a plastic article with an inside and outside surface; positioning and adhering the film to an interior molding surface of the mold by contacting the second surface of the core layer of the film with the interior molding surface of the mold; forming a labeled plastic article in the mold with sufficient heat to bond the heat seal layer of the film to the outside surface of the plastic article; cooling the labeled plastic article; and removing the labeled plastic article from the mold.

A further aspect of the invention is a labeled plastic article which is prepared by the in-mold labeling method of this invention.

An additional aspect of this invention is a method to improve the handleability of an in-mold label film comprising forming a film where the film comprises a heat seal layer which comprises a very low density polyethylene and a high density polyethylene.

### BRIEF DESCRIPTION OF THE DRAWINGS

Fig. 1 is a cross sectional view of a label film.
Fig. 2 is a representation of an embodiment of the method of preparing label film.

### DETAILED DESCRIPTION

The term "overlies" and cognate terms such as "overlying" and the like, when referring to the relationship of one or a first layer relative to another or a second layer, refers to the fact that the first layer partially or completely lies over the second layer. The first layer overlying the second layer may or may not be in contact with the second layer. For example, one or more additional layers may be positioned between the first layer and the second layer. The term "underlies" and cognate terms such as "underlying" and the like have similar meanings except that the first layer partially or completely lies under, rather than over, the second layer.

Polyethylene polymers can be classified into polymer types based on differences in density. Polyethylene polymer types can include very low density polyethylene (VLDPE) ranging from 0.86-0.915 g/cm³, low density polyethylene (LDPE) ranging from 0.915-0.925 g/cm³, medium density polyethylene (MDPE) ranging from 0.925-0.94 g/cm³, linear low density polyethylene (LLDPE) ranging from 0.915-0.94 g/cm³, and high density polyethylene (HDPE) ranging from 0.94-0.98 g/cm³. The density of the polyethylene polymers varies due to the molecular structure of the polyethylene which is affected by the polymerization conditions and the absence or presence of an alpha-olefin comonomer. In general, as the density increases the polyethylene polymers become more linear with less branching, more crystalline, and have higher melting points. Typically the very low density polyethylenes have the lowest melting points and the high density polyethylenes have the highest melting points of these polyethylene polymer types.

As described above, the in-mold label film comprises a heat seal layer overlying a core layer. The heat seal layer is activated by heat to form a bond with a plastic substrate. The heat seal layer comprises a very low density polyethylene (VLDPE) and a high density polyethylene (HDPE). The VLDPE can comprise a polyethylene copolymer having a high concentration of branches ranging in the order of one branch for every 7-25 carbon atoms along the polymer backbone. The VLDPE polyethylene copolymer can be formed from ethylene and at least one alpha-olefin comonomer having 3-30, 3-20, or 3-12 carbon atoms. The VLDPE can be prepared by polymerizing on a weight basis 40-99%, 50-98%, or 60-95% of ethylene with one or more alpha-olefin comonomers generally in the presence of a metallocene catalyst. The HDPE can comprise a polyethylene homopolymer and/or a copolymer comprising mainly unbranched molecules or molecules with very few branches along the polymer backbone. The HDPE polyethylene copolymer can be formed from ethylene and at least one alpha-olefin comonomer having 3-30, 3-20, or 3-12 carbon atoms. The HDPE homopolymer or copolymer can be prepared by polymerizing respectively ethylene or on a weight basis 80-99.5%, 90-99.5%, or 95-99.5% of ethylene with one or more alpha-olefin comonomers generally in the presence of a metallocene catalyst.

The high density polyethylene can be present in the heat seal layer in an amount on a weight basis of 0.5 to 40%, 1 to 30%, 3 to 30%, 0.5 to 25%, 1.5 to 25%, 3 to 20%, 5 to 20%, or 5 to 15%. An example of a useful high density polyethylene is Huntsman - H2105 which is a homopolymer having a melt flow index of 8.0 g/10 min. and a density of 0.963 g/cc.

The very low density polyethylene can be present in the heat seal layer in an amount on a weight basis of 10 to 95%, 10 to 75%, 15 to 55%, or 25 to 45%. Examples of the commercially available very low density polyethylenes include Dow Affinity - KC8852, which is an ethylene/octene copolymer containing a melt index of 3.0 g/10 min., a melt temperature of 68°C and a density of 0.875 g/cc; Exxon Exact 8203, which is an ethylene/octene copolymer containing a melt index of 3.0 g/10 min., a melt temperature of 73°C and a density of 0.882 g/cc; or Exxon Exact 4151, which is an ethylene/hexene based plastomer having a melt index of 2.2 g/10 min., a melt temperature of 88°C and a density of 0.895 g/cc.

In addition to the very low density polyethylene and the high density polyethylene, the heat seal layer contains one or more other polymers. The heat seal layer can comprise a blend of (i) a very low density polyethylene, (ii) a high density polyethylene, and (iii) one or more polymers selected from polymers other than (i) and (ii). The one or more polymers (iii) can comprise polyolefins including homopolymers and copolymers such as, e. g., low density PE (polyethylene), medium density PE, linear low density PE, polypropylene homopolymers and copolymers, and higher homologues; styrene homopolymers and copolymers such as, e. g., polystyrene, styrene maleic anhydride copolymer, styrene acrylonitrile copolymer, and acrylonitrile butadiene styrene copolymer; alkene-vinyl carboxylate copolymers such as, e. g., ethylene-vinyl acetate copolymers; alkene-(meth)acrylic acid copolymers such as, e. g., ethylene-acrylic acid copolymers; alkene-alkyl (meth)acrylate copolymers such as, e. g., ethylene-methyl methacrylate copolymers; alkene-vinyl alcohol copolymers such as, e. g., ethylene-vinyl alcohol copolymers; alkene-vinyl chloride copolymers such as, e. g., ethylene-vinyl chloride copolymers; polycarbonates; polyamides; polyurethanes; polysulfones; poly(vinylidene chlorides); poly(vinyl chlorides); ionomers based on alkali metal or zinc salts of alkene-(meth)acrylic acid copolymers; (meth)acrylate homopolymers and copolymers; fluoropolymers; thermoplastic polyesters; and mixtures of any of the foregoing polymers.

In one embodiment of the invention, the one or more polymers (iii) can comprise a polyolefin homopolymer or copolymer prepared from an olefin having 2-30, 2-10, 2-8, or 2-4 carbon atoms. The olefin can be an alpha-olefin such as, e. g., ethylene, propylene, 1-butene, or butylene. Polyolefin copolymers can be prepared by known procedures, including as disclosed in U.S. Patent No. 5,475,075, from the above described olefin and one or more different olefin comonomers having 2-30, 2-10, 2-8 or 2-4 carbon atoms. The olefin comonomers can be alpha-olefins such as, e. g., ethylene, propylene, 1-butene, isobutylene, 1-hexene or 1-octene. The one or more olefin comonomers can be present in the polyolefin copolymer on a weight or mole basis at 1-50%, 5-30%, 2-20% or 7-25%. In several embodiments of the invention, the heat seal layer comprises a VLDPE, a HDPE and an alkene-vinyl carboxylate copolymer or a VLDPE, a HDPE and an ethylene-vinyl acetate copolymer containing vinyl acetate in an amount on a weight basis of 2 to 40%, 6 to 30%, 9 to 25%, or 10 to 20%. Useful alkene-vinyl carboxylate copolymers are available commercially and include ethylene-vinyl acetate copolymers such as, e. g., Ateva 1231 (12% by weight vinyl acetate content, 3 g/10 min. melt index, 0.934 g/cm³ density, 97°C melt temperature) and Ateva 1821 (18% by weight vinyl acetate content, 3 g/10 min. melt index, 0.938 g/cm³ density) both of which are available from AT Plastics. The one or more polymers (III) can be present in the heat seal layer in an amount on a weight basis of 10 to 95%, 15 to 80%, 25 to 65%, or 35 to 55%.

In several embodiments of the invention, the total polyolefin content or the VLDPE and HDPE content or the VLDPE and HDPE and other polymer (iii) content in the heat seal layer based on weight can be 30-100%, 30-90%, 40-99%, 20-70%, 35-85%, 50-95%, 25-60%, 60-90%, 30-50%, or 80-100%.

The heat seal layer may also contain an antiblock and/or an antistatic additive. The antiblock additives can comprise natural silica such as, e. g., diatomaceous earth, synthetic silica, glass spheres, acrylic polymer, silicone resin microbeads such as, e. g., Tospearls from Toshiba, ceramic particles, or combinations of any of the foregoing antiblock additives. The antiblock additive may be added as a concentrate. An example of an antiblock concentrate is manufactured by A. Schulman Inc. of Akron, Ohio under the product name Polybatch AB5. The Polybatch AB5 is an antiblock concentrate containing 5 weight percent amorphous silica based in 95% low density polyethylene, and is designed for use in polyethylene applications. The Polybatch AB5 material has the following material properties: melt index of concentrate of 17+/-3 grams/10 minutes; ash (percent amorphous silica) of 5+/-2 percent; moisture retention (Karl Fisher @ 190°C) of 1000 ppm maximum; and pellets per gram of 45+/-5. When the antiblock is present the antiblock is present on a weight basis in an amount from about 10,000 to about 60,000, or from about 20,000 to about 50,000, or from about 40,000 ppm.

The antistatic additive or antistat can comprise a cationic additive such as, e. g., a quaternary ammonium halide salt, an anionic additive such as, e. g., a sulfonate alkali metal salt, a nonionic additive comprising a fatty acid derivative to include an ethoxylated fatty amine and/or an ethoxylated fatty amide, or combinations of any of the foregoing additives. The antistatic may be incorporated in the adhesive-containing or base layer charge and uniformly blended therewith. The amount of antistatic used may be varied for particular formulations and processing conditions. Typically from about 0.5% to about 15%, or from about 2% to about 10%, or about 1 to 5%, or about 2% by weight of the antistatic additive is used. An example of an antistatic additive is an antistatic concentrate manufactured by A. Schulman Inc. of Akron, Ohio and sold under the product name Polybatch VLA-55-SF. Polybatch VLA-55-SF is a specialty antistatic concentrate. The Polybatch VLA-55-SF material has the following material properties: melt index of the concentrate of 11-18 grams/10 minutes; and moisture retention (Karl Fisher @ 190°C) of 1000 ppm minimum. When using HDPE, which has higher static levels than some polyolefins, the amount of the antistat is generally increased by an amount in direct proportion to the amount of HDPE in the film or film layers.

In one embodiment of this invention, the heat seal layer does not contain a slip agent and the outer surface of the heat seal layer is not embossed. In another embodiment of the invention, the heat seal layer contains a slip agent and/or is embossed on its outer surface to form channels for air egress or to roughen the outer surface of the heat seal layer. While the inventive film provides improved handleability performance in the absence of slip agents and embossing, addition of slip agents and embossing to further optimize overall performance are within the scope of this invention.

The heat seal layer is designed for and activated at temperatures known to those skilled in the art. While the heat seal layer may activate at temperatures below those specified for activation, the heat seal layer is designed to activate at certain temperatures based on the substrate material under normal in-mold labeling conditions. In several embodiments of the invention, the heat seal layer can activate in a temperature range of 50-130°C, 60-115°C, 54-100°C, 57-80°C, or 62-70°C.

The in-mold label film of the present invention comprises a core layer. The core layer may be a single layer or a multilayer structure. The core layer may be prepared from meltable film-forming polymers or thermoplastic polymers comprising polyethylene homopolymer, or copolymer, polypropylene homopolymer or copolymer, polybutylene, ethylene-methyl acrylic acid copolymer, ethylene-ethyl acrylate copolymer, metallocene catalyst catalyzed polyolefins, polystyrene, polypropylene, cyclic olefins, ethylene-methyl acrylate copolymer, acrylonitrile-butadiene-styrene copolymer, ethylene-vinyl alcohol copolymer, ethylene-vinyl acetate copolymer, nylon, polybutylene, polyurethane, polysulfone, poly(vinylidene chloride), polycarbonate, poly(4-methyl-1-pentene), styrene-maleic anhydride copolymer, styrene-acrylonitrile copolymer, ionomer based on sodium or zinc salts of ethylene-methacrylic acid copolymer, poly(methyl methacrylate), cellulosic, fluoroplastic, polyacrylonitrile, poly(butylene terephthalate) (PBT), poly(ethylene terephthalate) (PET), thermoplastic polyester, or combinations of any of the foregoing polymers.

In one embodiment of the invention, the core layer comprises a polyolefin such as, for example, low, medium, or high density polyethylene, polypropylene or polybutylene or copolymers of ethylene, propylene or butylene with an olefin, such as those discussed above. The polyolefin can comprise a homopolymer prepared from a single olefin monomer to include, e. g., alpha-olefins having 2-30 carbon atoms, a copolymer prepared from 2 or more different olefin monomers to include, e. g., alpha-olefins having 2-30 carbon atoms, or a mixture thereof. The polyolefin can be prepared using a metallocene catalyst. The polyolefin can comprise a copolymer prepared from propylene and one or more alpha-olefin monomers where the alpha-olefin monomers can comprise alpha-olefins containing about two to about ten carbon atoms such as, for example, ethylene, isobutylene, 1-butene, 1-hexene and 1-octene. The polyolefin can comprise a homopolymer prepared from propylene. In one embodiment of the invention, the core layer comprises a polypropylene homopolymer, a polypropylene copolymer, or a mixture thereof. An example of a useful polypropylene homopolymer is sold by Huntsman Corporation of Houston, Texas, under the product number P4G3Z-050. The P4G3Z-050 product has a melt flow index of 3.5 grams/10 minutes and a density of 0.90 g/cc. The propylene copolymers include random propylene copolymers that contain about 3 to about 6% by weight ethylene. An example of a propylene copolymer includes a nucleated random copolymer that is sold by Huntsman Corporation of Houston, Texas, under the product name P5M4K-070X. The P5M4K-070X nucleated random copolymer contains 3.2% by weight ethylene and has a phenolic based antioxidant. Typically the core layer can comprise on a weight basis about 40% to about 100%, or from about 50% to about 90%, or from about 60% to about 80% of a film-forming or thermoplastic polymer such as, e. g., a polyolefin such as, a random polypropylene copolymer.

The core layer can further comprise a titanium dioxide concentrate. The titanium dioxide concentrate can comprise a blend of a polymer comprising a film-forming polymer or thermoplastic polymer such as, e. g., a polyolefin and a titanium dioxide. An example of a concentrate is a blend on a weight basis of 50% polypropylene homopolymer and 50% titanium dioxide. The concentrate is available in pellet form for convenience of addition to the extrusion feed. In one embodiment, the titanium concentrate is present in an amount from about 2% to about 30%, or from about 5% to about 25%, or from about 10% to about 20% by weight of the core layer. An example of a titanium dioxide concentrate is commercially available from A. Schulman Inc. Akron, Ohio under the product name Polybatch P8555-SD. The Polybatch P8555-SD product contains 50% TiO₂ in polypropylene.

In another embodiment, the core layer may include a calcium carbonate concentrate. The calcium carbonate concentrate can comprise a blend of a polymer comprising a film-forming polymer or thermoplastic polymer such as, e. g., a polyolefin such as a polypropylene homopolymer and a calcium carbonate. The calcium carbonate concentrate may be present in an amount from 1-90%, 30-85%. 40-80% or 50-70% by weight of the core layer. An example of a calcium carbonate concentrate is composed of polypropylene with 40 weight percent calcium carbonate mineral filler. The concentrate has a melt index of 3.0 minimum to 6.0 maximum (ASTM D1238), ash of 40.0+/-2.0%, volatiles of 500 ppm max. and a bulk density of 730+/-50 g/l. A useful calcium carbonate concentrate is sold by A. Schulman Inc. of Akron, Ohio under the product name Polybatch PF92D.

The inventive in-mold label can further comprise a printable skin layer. The skin or print layer is developed for its appearance and printing characteristics. Materials for the skin or print layer for in-mold labels comprise but are not limited to the following film forming materials used alone or in combination such as polyethylene homopolymer or copolymer, polyolefin prepared using metallocene catalysts, syndiotactic polystyrene, syndiotactic polypropylene, cyclic polyolefin, ethylene-methyl acrylic acid copolymer, ethylene-ethyl acrylate copolymer, ethylene-methyl acrylate copolymer, acrylonitrile-butadiene-styrene copolymer, ethylene-vinyl alcohol copolymer, ethylene-vinyl acetate copolymer, nylon or polyamide, polybutylene, polystyrene, polyurethane, polysulfone, poly(vinylidene chloride), polypropylene homopolymer or copolymer, polycarbonate, poly(4-methyl-1-pentene), styrene-maleic anhydride copolymer, styrene-acrylonitrile copolymer, ionomer based on sodium or zinc salts of ethylene/methacrylic acid copolymer, poly(methyl methacrylate), cellulosic, fluoroplastic, polyacrylonitrile, compatibilizer such as e. g. a maleic anhydride grafted polyolefin, and thermoplastic polyester. In embodiments of the invention, the skin layer can comprise a polymer chosen from a polypropylene homopolymer, a polypropylene copolymer, a polyethylene homopolymer, a polyethylene copolymer, an ethylene-vinyl carboxylate copolymer, an ethylene-alkyl (meth)acrylate copolymer, and mixtures of any of the foregoing polymers. In another embodiment, a mixture of an ethylene-vinyl acetate copolymer and a polypropylene homopolymer is used in the skin layer. An example of a polypropylene homopolymer is Huntsman P4G4K-173X. The P4G4K-173X product is a nucleated homopolypropylene which has a melt index of 3.5 g/10 min. An example of an ethylene-vinyl acetate copolymer is AT Plastics - Ateva 1821 which is described above.

The in-mold label film of the present invention can further comprise one or more tie layers. The tie layers may be positioned between the core layer and the heat seal layer and/or between the core layer and the skin layer. The tie layers can comprise one or more thermoplastic polymeric materials comprising a polyolefin as described above to include a homopolymer and/or copolymer of ethylene and/or propylene, an alkene-vinyl carboxylate copolymer such as, e. g., an ethylene-vinyl acetate copolymer, an alkene-alkyl (meth)acrylate copolymer such as, e. g., an ethylene-methyl methacrylate copolymer, an acrylonitrile-conjugated diene copolymer such as, e. g., an acrylonitrile-butadiene copolymer, an additive concentrate such as, e. g., a TiO₂ and/or CaCO₃ concentrate as described above, or combinations of any of the foregoing polymers. Useful polyolefins include, e. g., a Huntsman polypropylene homopolymer P4G3Z-050 which has a melt index of 11.0 g/10 min. Useful additive concentrates include, e. g., an A. Schulman 50% TiO₂ in polypropylene concentrate Polybatch P8555-SD and an A. Schulman 40% CaCO₃ in polypropylene concentrate Polybatch PF92D.

The inventive in-mold label film can be manufactured in one or more steps comprising one or more extrusion steps of a single layer cast through a flat die or an annular die, one or more coextrusion steps of two or more layers cast through a flat die or an annular die, one or more laminating steps, one or more coating steps, one or more orientation steps, one or more annealing steps, or combinations of any of the foregoing steps. In embodiments of the invention, one or more of the layers of the inventive film is processed in a step comprising an extrusion, a coextrusion, a flat die casting, an annular die casting (blown film), a lamination, a coating, a uniaxial orientation, a biaxial orientation, an annealing, or a combination of any one of the foregoing steps. The inventive film can be oriented or nonoriented. The orientation can be uniaxial or biaxial. The orientation can be in a machine direction, a transverse direction lying perpendicular to the machine direction, or any combination thereof. The uniaxial orientation can be in a machine direction. The biaxial orientation can be in successive machine and transverse directions or in simultaneous machine and tranverse directions via, e. g., in a LISM process. The biaxial orientation can be a combination of one or more orientations in the machine direction and one or more orientations in the transverse direction. In several embodiments of this invention, a single layer of the film is oriented, two or more layers of the film are oriented, the core layer of the film is oriented, or all the layers of the film are oriented. Orienting the film can comprise one or more steps comprising a cold compression rolling, a hot compression rolling, a cold stretching through a machine direction orientation (MDO) line, a hot stretching through a MDO line, a blown film bubble process, a cold and/or hot stretching through a tenter frame in a transverse direction, a cold and/or hot stretching simultaneously in both machine and transverse directions (LISM technology), or combinations of any of the foregoing steps. The orienting of the film can comprise two or more steps in which the film is oriented more than once in the machine direction, in the transverse direction, or in both the machine and transverse directions. The orienting can be done on the film before or after it is wound into a roll form. The inventive film can be annealed (heat set), nonannealed, or annealed for dimensional stability in order to prevent or minimize shrinkage and/or distortion of the film when the film has an application with further processing or service involving temperatures above room temperature. In several embodiments of the invention, the inventive film comprising two or more layers is a) extruded and/or coextruded, oriented or nonoriented, and annealed or nonannealed, b) coextruded, oriented, and annealed or nonannealed, or c) coextruded, oriented in a machine direction or oriented in the machine direction only, and annealed. In another embodiment of the invention, the inventive film is prepared by coextrusion or coextrusion and casting through a flat die, orientation in the machine direction only, and annealing to provide for dimensional stability. In several embodiments of the invention, the film thickness is 20 mils or less, 12 mils or less, less than 10 mils, 2-10 mils, 2-8 mils, 3-8 mils, or 3-5 mils. In several further embodiments of the invention, the core layer thickness can be 60-97.5%, 65-95%, or 70-90% of the film thickness, while the thickness of the other layer or the other layers in combination can be 2.5-40%, 5-35%, or 10-30% of the film thickness. In additional embodiments of the invention, the film can be oriented by stretching it through a MDO line comprising a series of an initial slow drawing roll and a final fast drawing roll where the stretch ratio, based on ratio of the speed of the fast drawing roll to the slow drawing roll, can range from 2:1 to 10:1, 2:1 to 8:1, 4:1 to 10:1, 3:1 to 7:1, or 4:1 to 6:1. Methods of manufacturing in-mold label films are known and include procedures disclosed in U.S. Patent Nos. 5,435,963 and 6,716,501.

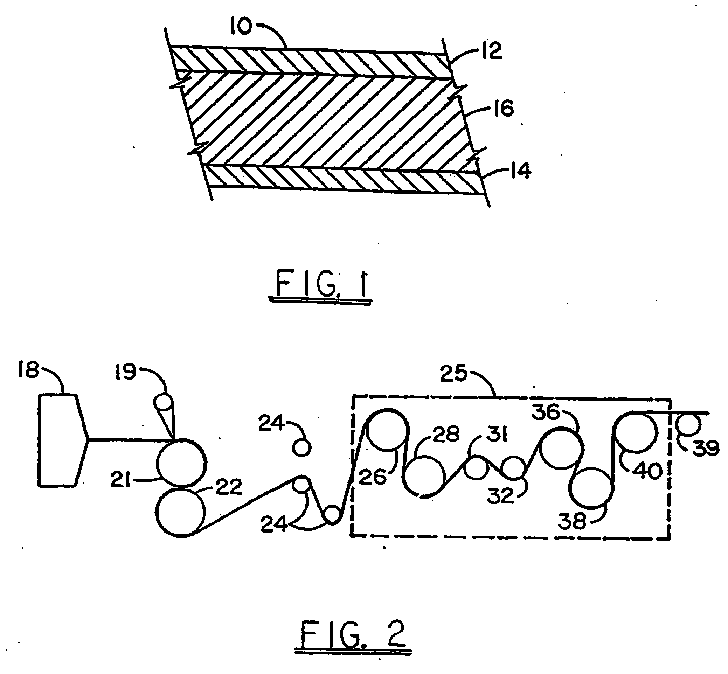

In an embodiment of the invention, as illustrated in Figure 1, the inventive film 10 comprises a coextruded construction comprising a core layer 16, a heat seal layer 12 and a skin layer 14.

Other embodiments of this invention are illustrated in Figure 2. Thermoplastic polymers for the layers of the inventive film are coextruded from two or more extruders through a single die 18 and exit as a multilayered film. During this coextrusion, the processing temperature is generally maintained at or above the softening temperature of the thermoplastic polymers. The temperature of the coextrusion die can be maintained in a range of 200-260°C. The coextruded film is cast with the aid of an air knife 19 onto casting roll 21 and advanced around casting roll 21 onto casting roll 22. Casting rolls 21 and 22 can be maintained at temperatures of 20-70°C. The film advances around casting roll 22 and guide rolls 24 and enters the uniaxial or machine direction orientation (MDO) unit 25. Within the MDO unit, the film is initially stretched and stiffened in the direction of travel or the machine direction. The film is advanced around first and second preheat rolls 26 and 28 which can be maintained at temperatures of 60-140°C. The film then advances to slow draw roll 31. The speed of the advancing coextruded film up to and including the slow draw roll 31 can range from 20-130 feet per minute and in embodiment is 30 feet per minute. The film is then pulled and stretched by fast draw roll 32 at a speed which can range from 120-600 feet per minute and in an embodiment is 180 feet per minute. In an embodiment of the invention where the feet per minute speed ratio of the fast draw roll 32 to the slow draw roll 31 is 180:30 or 6:1, the film is stretched lengthwise about sixfold and is drawn down in thickness in direct proportion to the stretching to approximately 1/6 of its nonstretched thickness. The draw rolls 31 and 32 can be maintained at temperatures of 70-145°C. The stretched film has a "memory" which causes it to be dimensionally unstable with a tendency to shrink or return to its prestretched length over time and/or with exposure to heat. The stretched film can be heat set or annealed to partially relax the stretched film and thus remove the tendency to shrink and provide dimensional stability for processing and service conditions of the intended application. In embodiments of the invention, the stretched film can be annealed at elevated temperatures above ambient where the film is drawn over annealing rolls taut at the same speed or slack at slower speeds than the preceding fast draw roll 32. The film is then advanced from the fast draw roll 32 over annealing rolls 36 and 38 which can be maintained at temperatures of 30-140°C at speeds in the range of 120-600 feet per minute or at speeds below 120 feet per minute. The film then advances over chill roll 40 which can be maintained at temperatures ranging from ambient to 60°C. The film is advanced and exits the MDO unit. In an embodiment of the invention, the film can be processed additionally such as, e. g., by advancing it through a flame or corona surface treatment unit to enhance printability. In Figure 2, the film exits the MDO unit and is put in roll form for purposes of transportation and storage by winding onto winder roll 39.

In embodiments of the invention, the film can be formed by coating the heat seal layer onto the core layer in a conventional coating process or by coextruding the heat seal layer with the core layer or with the core layer and one or more additional layers. Typically, the heat seal layer is tailored to be heat sensitive. The inventive label film can be printed then die or laser cut. The printed and cut label film can be placed inside a mold cavity during a molding process for producing a plastic article, such as, a container so that the adhesive or heat seal layer side faces the outside surface of the hot plastic article. As the plastic article is molded, the heat activates or melts the adhesive or heat seal layer on the label film, and the label film and the plastic article form a permanent bond.

The present invention further includes a method for in-mold labeling comprising providing an in-mold label film comprising a core layer and a heat seal layer, the core layer having a first and second surface and the heat seal layer having an inner surface and an outer surface with the inner surface of the heat seal layer overlying the first surface of the core layer, wherein the heat seal layer comprises a very low density polyethylene and a high density polyethylene; inserting the film into a mold for producing a plastic substrate with an inside and outside surface; positioning and adhering the film to an interior molding surface of the mold by contacting the second surface of the core layer of the film with the internal molding surface of the mold; forming a labeled plastic substrate in the mold with sufficient heat to bond the heat seal layer of the film to the outside surface of the plastic substrate; cooling the labeled plastic article; and removing the labeled plastic article from the mold.

One embodiment of this invention is a labeled plastic article prepared in accordance with the above described method for in-mold labeling comprising the inventive in-mold label film. The labeled plastic article can comprise a container for a commercial or a retail article or material.

A further embodiment of the invention is a method to improve the handleability of an in-mold label film that comprises forming the inventive in-mold label film, as described herein, where the film comprises a core layer and a heat seal layer, the core layer has a first and second surface and the heat seal layer has an inner surface and an outer surface with the inner surface of the heat seal layer overlying the first surface of the core layer, and the heat seal layer comprises a very low density polyethylene and a high density polyethylene.

### EXAMPLES

In order that persons in the art may better understand the practice of the present invention, the following examples are provided by way of illustration, and not by way of limitation.

These examples are samples of film typically used as in-mold label films. For in-mold labeling this film would typically be converted in printing and die cutting steps prior to an in-mold labeling process.

Table 1 shows the composition of the heat seal layer by weight percent of components. The EVA copolymer is AT Plastics - ATEVA 1231, which has 12% vinyl acetate, a melt index of 3.0 g/10 min. and a melt temperature of 97°C. The VLDPE is ethylene/octene copolymer Dow Affinity - KC8852, which has a melt index of 3.0 g/10 min., a melt temperature of 68°C and a density of 0.875 g/cc. The HDPE is a high density polyethylene sold by Huntsman Corporation of Houston, Texas, under the product number H2105. The H2105 product has the following characteristics: a melt flow index of 8.0 g/10 min. and a density of 0.963 g/cc.

In addition to the VLDPE, HDPE and EVA the heat seal layers of Examples 1-C21 contain about 2.5% by weight of an antiblock agent, about 2% by weight of an antistatic agent and about 1% by weight of a process aid. The antiblock concentrate is manufactured by A. Schulman Inc. of Akron, Ohio under the product name Polybatch AB5 antiblock. The Polybatch AB5 is an antiblock concentrate containing 5 weight percent amorphous silica based in 95% low density polyethylene, and is designed for use in polyethylene applications. The Polybatch AB5 material has the following material properties: melt index of concentrate of 17+/-3 grams/10 minutes; ash (percent amorphous silica) of 5+/-2 percent; moisture retention (Karl Fischer @ 190°C) of 1000 ppm maximum; and pellets per gram of 45+/-5. The process aid is Ampacet 10919 Process Aid, which contains a 3% Dynamar process aid based in low density polyethylene. The antistatic concentrate is also manufactured by A. Schulman Inc. of Akron, Ohio under the product name Polybatch VLA 55 SF. Polybatch VLA 55 SF material has the following material properties: melt index of the concentrate of 11-18 grams/10 minutes; and moisture retention (Karl Fischer @ 190° C) of 1000 ppm minimum.

The materials for the heat seal layer are melted and mixed in a 21/2 inch extruder manufactured by Davis Standard of Pawcatuck, Conn. having an extruder barrel length (L) to extruder barrel internal diameter (D) ratio or UD ratio of 24:1. The extruder contains six temperature zones which were maintained at 177, 205, 216, 222, 222, and 224°C, respectively.

The printable skin layers of the three layered film of these examples are melted and mixed in a 21/2 inch extruder having an UD ratio of 24:1. This extruder is manufactured by Davis Standard of Pawcatuck, Conn. The extruder contains six temperature zones which where are maintained during melting and mixing at 177, 205, 222, 222, 227, and 227°C, respectively.

The composition of the print layer for Examples 1-C21 comprises 59% by weight polypropylene homopolymer P4G3Z-050 from Huntsman; 34.5% by weight ethylene vinyl acetate, AT Plastics 1821; 0.5% by weight antistatic agent Polybatch VLA-55-SF from A. Schulman; and 6% by weight antiblock agent Polybatch AB5 from A. Schulman.

The cores of the exemplary films are melted and mixed in a 130 mm extruder having an UD ratio of 34:1. This extruder is manufactured by Davis Standard of Pawcatuck, Conn. The extruder contains eight temperature zones which are maintained during melting and mixing at 196, 199, 202, 207, 210, 213, 216, and 227°C, respectively. The calcium carbonate of the core material is dried prior to mixing in an oven manufactured by Conair Franklin of Franklin, Pa. at 80°C for four hours to insure that the concentrate material contains little or no moisture.

The three extruders feed their extruded materials into a feedblock-single manifold coathanger die having at least three feed ports. In another embodiment of the invention, the extruders feed into a multimanifold die having two or more manifolds. Both the feedblock, die and adapter pieces which connect the extruders, feedblock and die together are held at a constant temperature of 218°C. The three layered film is extruded onto a casting roll which is maintained at 30°C. An air knife aids in casting the film onto the casting roll and in cooling the film. The film advances to a second casting roll maintained at 66°C. The film is then stretched uniaxially in the machine direction by being run through an orientation unit which orients the film in the machine direction (MD). The orientation unit consists of a number of rolls the first two of which are used for pre-heating the film prior to stretching. These rolls are maintained at 110°C and 80°C, respectively, so that a substantial portion of the thickness of the film is heated. The film is stretched between the slow draw roll, maintained at 100°C (moving the film at 30 feet/minute) and a fast draw roll, maintained at 80°C (moving the film at 180 feet/minute). All of the exemplary films are stretched or drawn down to approximately 4 mils which is approximately 20 percent of the original thickness of the film as it is extruded onto the casting roll. The stretched uniaxially oriented film is then cured (or annealed) by applying heat to the tensioned film at an annealing station with two rolls. The annealing rolls are maintained at a temperature of 127°C and 85°C, respectively. The film is then passed onto a chill roll maintained at a temperature of 20°C.

**Table 1**

| Heat Seal Layer Content vs. COF and Heat Seal Performance | | | | | | | | |
|---|---|---|---|---|---|---|---|---|
| **Ex** | **VLDPE** | **EVA** | **HDPE** | **COF Static PA** | **COF Kinetic PA** | **COF Static AS** | **COF Kinetic AS** | **Heat Seal at 300°F, Grams** |
| 1 | 40.95 | 40.95 | 12.60 | 0.714 | 0.536 | 0.403 | 0.476 | 1103.0 |
| 2 | 40.95 | 40.95 | 12.60 | 0.675 | 0.603 | 0.485 | 0.520 | 1197.7 |
| 3 | 40.95 | 40.95 | 12.60 | 0.660 | 0.582 | 0.288 | 0.287 | 863.7 |
| 4 | 40.95 | 50.40 | 3.15 | 0.963 | 0.752 | 0.788 | 0.777 | 970.8 |
| 5 | 40.95 | 50.40 | 3.15 | 0.888 | 0.810 | 0.823 | 0.893 | 1222.2 |
| 6 | 40.95 | 50.40 | 3.15 | 0.850 | 0.731 | 0.483 | 0.508 | 1347.2 |
| 7 | 50.40 | 40.95 | 3.15 | 0.956 | 0.889 | 0.857 | 0.887 | 972.6 |
| 8 | 50.40 | 40.95 | 3.15 | 0.895 | 1.029 | 0.865 | 0.901 | 1098.4 |
| 9 | 50.40 | 40.95 | 3.15 | 0.889 | 0.968 | 0.661 | 0.686 | 1098.2 |
| 10 | 37.80 | 37.80 | 18.90 | 0.677 | 0.656 | 0.463 | 0.473 | 1061.0 |
| 11 | 37.80 | 37.80 | 18.90 | 0.605 | 0.675 | 0.389 | 0.475 | 1119.1 |
| 12 | 37.80 | 37.80 | 18.90 | 0.672 | 0.682 | 0.313 | 0.331 | 945.4 |
| 13 | 44.10 | 44.10 | 6.30 | 0.956 | 0.807 | 0.673 | 0.701 | 1324.1 |
| 14 | 44.10 | 44.10 | 6.30 | 0.999 | 0.925 | 0.454 | 0.510 | 1370.8 |
| 15 | 44.10 | 44.10 | 6.30 | 0.885 | 0.882 | 0.430 | 0.453 | 1375.5 |
| C16 | 56.70 | 37.80 | 0.0 | 1.226 | 1.000 | 1.242 | 1.174 | 1413.1 |
| C17 | 56.70 | 37.80 | 0.0 | 1.195 | 1.177 | 1.260 | 1.218 | 1364.9 |
| C18 | 56.70 | 37.80 | 0.0 | 1.050 | 1.062 | 0.676 | 0.686 | 1315.8 |
| C19 | 37.80 | 56.70 | 0.0 | 1.051 | 0.979 | 0.532 | 0.516 | 781.4 |
| C20 | 37.80 | 56.70 | 0.0 | 1.077 | 1.066 | 1.006 | 0.952 | 782.3 |
| C21 | 37.80 | 56.70 | 0.0 | 0.977 | 0.992 | 0.532 | 0.516 | 828.3 |

Table 1 gives the heat seal layer compositions for inventive Examples 1-15 and comparative Examples C16-C21, the corresponding static and kinetic coefficient of friction (COF) values for heat seal layer on print layer (PA) and heat seal layer on steel (AS), and the corresponding heat seal performance values. The coefficient of friction was measured using a Thwing-Albert Friction/Peel Tester model 255-1 V2.1 according to ASTM D1894, ASTM D4521 and TAPPI-T816. The heat seal performance values were determined in a Heat Seal Test that measures a peel adhesion force. The Heat Seal Test procedure involved the following steps: 1. cycling a Heat Sealer (Sencorp Model 12AS/1 Heat Seal Bar) two times before heat sealing an in-mold label film sample, 2. sealing a film sample to 4 mil nonoriented high density polyethylene (HDPE) using the Heat Sealer @ 100 psi for 1 second @ 300°F to form a film-HDPE test sample where the test sample is put between polyester to prevent sticking of the test sample to the Heat Sealer, 3. cutting four test samples measuring 1 inch by 8 inch from each film-HDPE heat sealed test sample and allowing the cut test samples to cool/set for at least 24 hours, and 4. measuring a peel adhesion force of the 4 test samples for each exemplary film in a Tensile Tester (MTS Model 4501010) in a 100 Ib. load cell with a 2 inch grip separation and cross head speed of 10 inches per minute where the peel adhesion force (heat seal performance value) is recorded as an average value in grams. The heat seal layer compositions listed in Table 1 total 94.5%. The remaining 5.5% is 2.5% by weight of an antiblock agent, 2% by weight of an antistatic agent and about 1% by weight of a process aid. The data in Table 1 show that the inventive Examples 1-15, containing a HDPE in the heat seal layer, have a reduced coefficient of friction relative to comparative Examples C16-C21. This reduced coefficient of friction can improve handleability of the inventive film during, e. g., sheeting and feeding of the film for printing, die cutting and in-mold labeling. This improvement in handleability can be obtained without adding an additional film embossing step or including a slip agent in the film which can decrease printability.

The data in Table 1 also demonstrate that incorporating HDPE into a heat seal layer of the inventive film does not adversely affect heat seal performance since the heat seal values of inventive Examples 1-15 fall within the range of the heat seal values for comparative Examples C16-C21 which do not contain HDPE. Further, the heat seal values and coefficient of friction values of the inventive film have been found to correlate respectively with satisfactory seal performance and handleability in actual in-mold labeling trials.

In one embodiment, inventive film, comprising a heat seal layer that contains a high density polyethylene, has a reduced coefficient of friction for improved handleability while maintaining satisfactory heat seal performance. The inventive film properly feeds or dispenses during printing, die cutting and in-mold labeling processing and forms an effective bond or heat seal with a plastic substrate during in-mold labeling processing.

## Claims

1. An in-mold label film, comprising:
a core layer; and
a heat seal layer;
wherein the core layer has a first and second surface and the heat seal layer has an inner surface and an outer surface with the inner surface of the heat seal layer overlying the first surface of the core layer, and the heat seal layer comprises a very low density polyethylene, a high density polyethylene, and at least one alkene copolymer selected from (i) an alkene-vinyl carboxylate copolymer, (ii) an alkene-(meth)acrylic acid copolymer, (iii) an alkene-alkyl (meth)acrylate copolymer, (iv) an alkali metal or zinc salt of an alkene-(meth)acrylic acid copolymer, and (v) a mixture of two or more of the foregoing alkene copolymers.

2. The film of claim 1 wherein the heat seal layer comprises about 1 to 30% by weight of high density polyethylene.

3. The film of claim 1 wherein alkene-vinyl carboxylate copolymer (i) is an ethylene-vinyl acetate copolymer.

4. The film of claim 3 wherein vinyl acetate content of the ethylene-vinyl acetate copolymer is 6 to 30% by weight.

5. The film of claim 1 further comprising a printable skin layer overlying the second surface of the core layer.

6. The film of claim 1 further comprising at least one tie layer between the core layer and the heat seal layer.

7. The film of claim 1 wherein the core and heat seal layers are extruded or coextruded.

8. The film of claim 7 wherein the extruded or coextruded layers of the film are cast from a flat die.

9. The film of claim 7 wherein the extruded or coextruded layers of the film are cast from an annular die.

10. The film of claim 1 wherein the film is oriented.

11. The film of claim 10 wherein the film is uniaxialiy oriented.

12. The film of claim 10 wherein the film is biaxially oriented.

13. The film of claim 1 wherein the core layer comprises a polypropylene homopolymer, a polypropylene copolymer, or a mixture thereof.

14. The film of claim 5 wherein the skin layer comprises a polymer chosen from a polypropylene homopolymer, a polypropylene copolymer, a polyethylene homopolymer, a polyethylene copolymer, an ethylene-vinyl carboxylate copolymer, an ethylene-alkyl (meth)acrylate copolymer, and mixtures of any of the foregoing polymers.

15. The film of claim 1 wherein the film is coextruded and uniaxaially oriented in the machine direction.

16. The film of claim 15 wherein the film is annealed.

17. A labeled plastic article comprising the in-mold label film of claim 1.

18. A method for in-mold labeling comprising:
providing the in-mold label film of claim 1;
inserting the film into a mold for producing a plastic article with an inside and outside surface;
positioning and adhering the film to an interior molding surface of the mold by contacting the second surface of the core layer of the film with the interior molding surface of the mold;
forming a labeled plastic article in the mold with sufficient heat to bond the heat seal layer of the film to the outside surface of the plastic article;
cooling the labeled plastic article; and
removing the labeled plastic article from the mold.

19. A labeled plastic article prepared in accordance with the method of claim 18.

20. A method to improve the handleability of an in-mold label film, comprising:
forming an in-mold label film wherein the film comprises a core layer and a heat seal layer, wherein the core layer has a first and second surface and the heat seal layer has an inner surface and an outer surface with the inner surface of the heat seal layer overlying the first surface of the core layer, wherein the heat seal layer comprises a very low density polyethylene, a high density polyethylene, and at least one alkene copolymer selected from (i) an alkene-vinyl carboxylate copolymer, (ii) an alkene-(meth)acrylic acid copolymer, (iii) an alkene-alkyl (meth)acrylate copolymer, (iv) an alkali metal or zinc salt of an alkene-(meth)acrylic acid copolymer, and (v) a mixture of two or more of the foregoing alkene copolymers.

## Patentansprüche

1. Eine forminterne Labelfolie, die umfasst:
eine Kernschicht und
eine Heißsiegelschicht;
worin die Kernschicht eine erste und eine zweite Oberfläche besitzt und die Heißsiegelschicht eine Innenfläche und eine Außenfläche besitzt, wobei die Innenfläche der Heißsiegelschicht die erste Oberfläche der Kernschicht überlagert, und die Heißsiegelschicht ein Polyethylen sehr niedriger Dichte umfasst, sowie ein Polyethylen hoher Dichte und mindestens ein Alkencopolymer, ausgewählt aus (i) einem Alken-Vinylcarboxilate-Copolymer, (ii) ein Alken-(Meth)acrylsäure-Copolymer, (iii) ein Alken-Alkyl(meth)acrylat-Copolymer, (iv) ein Alkalimetall- oder Zinksalz eines Alken-(Meth)acrylsäure-Copolymers, und (v) ein Gemisch aus zwei oder mehreren der vorgenannten Alkencopolymere.

2. Die Folie nach Anspruch 1, worin die Heißsiegelschicht etwa 1 bis 30 Gewichtsprozent Polyethylen hoher Dichte umfasst.

3. Die Folie nach Anspruch 1, worin Alken-Vinylcarboxilate-Copolymer (i) ein Ethylen-Vinylacetat-Copolymer ist.

4. Die Folie nach Anspruch 3, worin der Vinylacetatanteil des Ethylen-Vinylacetat-Copolymers 6 bis 30 Gewichtsprozent beträgt.

5. Die Folie nach Anspruch 1, die ferner eine bedruckbare Oberflächenschicht umfasst, die die zweite Oberfläche der Kernschicht überlagert.

6. Die Folie nach Anspruch 1, die ferner mindestens eine Verbindungsschicht zwischen der Kernschicht und der Heißsiegelschicht umfasst.

7. Die Folie nach Anspruch 1, worin die Kern- und Heißsiegelschichten extrudiert oder coextrudiert sind.

8. Die Folie nach Anspruch 7, worin die extrudierten oder coextrudierten Schichten der Folie von einer Flachdüse druckgegossen werden.

9. Die Folie nach Anspruch 7, worin die extrudierten oder coextrudierten Schichten der Folie von einer Ringdüse druckgegossen werden.

10. Die Folie nach Anspruch 1, worin die Folie orientiert ist.

11. Die Folie nach Anspruch 10, worin die Folie uniaxial orientiert ist.

12. Die Folie nach Anspruch 10, worin die Folie biaxial orientiert ist.

13. Die Folie nach Anspruch 1, worin die Kernschicht ein Polypropylen-Homopolymer, ein Polypropylen-Copolymer oder ein Gemisch davon umfasst.

14. Die Folie nach Anspruch 5, worin die Oberflächenschicht ein Polymer umfasst, das gewählt ist aus einem Polypropylen-Homopolymer, einem Polypropylen-Copolymer, einem Polyethylen-Homopolymer, einem Polyethylen-Copolymer, einem Ethylen-Vinylcarboxylat-Copolymer, einem Ethylen-Alkyl (Meth)acrylat-Copolymer und Gemischen von einem der vorgenannten Polymere.

15. Die Folie nach Anspruch 1, worin die Folie coextrudiert und in Maschinenrichtung uniaxial orientiert ist.

16. Die Folie nach Anspruch 15, worin die Folie wärmebehandelt ist.

17. Ein etikettiertes Kunststoffteil, das die forminterne Labelfolie nach Anspruch 1 umfasst.

18. Ein Verfahren zum forminternen Etikettieren, das umfasst:
zur Verfügung Stellen der forminternen Labelfolie nach Anspruch 1;
Einlegen der Folie in eine Form zur Herstellung eines Kunststoffteils mit einer inneren und äußeren Oberfläche;
Positionieren und Verkleben der Folie mit einer Innenseite der Form durch in Kontaktbringen der zweiten Oberfläche der Kernschicht der Folie mit der Innenseite der Form;
Bilden eines etikettierten Kunststoffteils in der Form mit ausreichender Wärme für die Verbindung der Heißsiegelschicht der Folie mit der Außenfläche des Kunststoffteils;
Kühlen des etikettierten Kunststoffteils; und
Entfernen des etikettierten Kunststoffteils aus der Form.

19. Ein etikettiertes Kunststoffteil, das in Übereinstimmung mit dem Verfahren nach Anspruch 18 vorbereitet wurde.

20. Ein Verfahren zur Verbesserung der Handhabbarkeit eines forminternen Labels, das umfasst:
Bilden einer forminternen Labelfolie, worin die Folie eine Kernschicht und eine Heißsiegelschicht umfasst, worin die Kernschicht eine erste und eine zweite Oberfläche besitzt und die Heißsiegelschicht eine Innenfläche und eine Außenfläche besitzt, wobei die Innenfläche der Heißsiegelschicht die erste Oberfläche der Kernschicht überlagert, und die Heißsiegelschicht ein Polyethylen sehr niedriger Dichte umfasst, sowie ein Polyethylen hoher Dichte und mindestens ein Alkencopolymer, ausgewählt aus (i) einem Alken-Vinylcarboxilate-Copolymer, (ii) ein Alken-(Meth)acrylsäure-Copolymer, (iii) ein Alken-Alkyl(meth)acrylat-Copolymer, (iv) ein Alkalimetall- oder Zinksalz eines Alken-(Meth)acrylsäure-Copolymers, und (v) ein Gemisch aus zwei oder mehreren der vorgenannten Alkencopolymere.

## Revendications

1. Film de surmoulage d'étiquette, comprenant :
une couche centrale, et
une couche thermosoudable,
étant entendu que la couche centrale a une première et une seconde surface et que la couche thermosoudable a une surface interne et une surface externe, la surface interne de la couche thermosoudable recouvrant la première surface de la couche centrale, et que la couche thermosoudable comprend un polyéthylène à très basse densité, un polyéthylène à haute densité et au moins un copolymère d'alcène sélectionné parmi (i) un copolymère d'alcène et de vinylcarboxylate, (ii) un copolymère d'alcène et d'acide (méth)acrylique, (iii) un copolymère d'alcène et de (méth)acrylate d'alkyle, (iv) un métal alcalin ou un sel de zinc d'un copolymère d'alcène et d'acide (méth)acrylique, et (v) un mélange de deux ou davantage des copolymères d'alcène précédents.

2. Film selon la revendication 1 étant entendu que la couche thermosoudable comprend environ 1 à 30 % en poids de polyéthylène à haute densité.

3. Film selon la revendication 1 étant entendu que le copolymère d'alcène et de vinylcarboxylate (i) est un copolymère d'éthylène et d'acétate de vinyle.

4. Film selon la revendication 3 étant entendu que la teneur en acétate de vinyle du copolymère d'éthylène et d'acétate de vinyle est de 6 à 30 % en poids.

5. Film selon la revendication 1 comprenant par ailleurs une couche formant peau imprimable recouvrant la seconde surface de la couche centrale.

6. Film selon la revendication 1 comprenant par ailleurs au moins une couche adhésive entre la couche centrale et la couche thermosoudable.

7. Film selon la revendication 1 étant entendu que les couches centrale et thermosoudable sont extrudées ou coextrudées.

8. Film selon la revendication 7 étant entendu que les couches extrudées ou coextrudées du film sont coulées à partir d'une filière plate.

9. Film selon la revendication 7 étant entendu que les couches extrudées ou coextrudées du film sont coulées à partir d'une filière annulaire.

10. Film selon la revendication 1 étant entendu que le film est orienté.

11. Film selon la revendication 10 étant entendu que le film est orienté uniaxialement.

12. Film selon la revendication 10 étant entendu que le film est orienté biaxialement.

13. Film selon la revendication 1 étant entendu que la couche centrale comprend un homopolymère de polypropylène, un copolymère de polypropylène ou un mélange de ceux-ci.

14. Film selon la revendication 5 étant entendu que la couche formant peau comprend un polymère choisi parmi un homopolymère de polypropylène, un copolymère de polypropylène, un homopolymère de polyéthylène, un copolymère de polyéthylène, un copolymère d'éthylène et de vinylcarboxylate, un copolymère d'éthylène et de (méth)acrylate d'alkyle, et des mélanges de n'importe lesquels des polymères précédents.

15. Film selon la revendication 1 étant entendu que le film est coextrudé et orienté uniaxialement dans la direction de la machine.

16. Film selon la revendication 15 étant entendu que le film est recuit.

17. Article plastique étiqueté comprenant le film de surmoulage d'étiquette selon la revendication 1.

18. Procédé d'étiquetage par surmoulage consistant :
à réaliser le film de surmoulage d'étiquette selon la revendication 1 ;
à insérer le film dans un moule pour produire un article plastique ayant une surface interne et externe ;
à positionner et faire adhérer le film à une surface de moulage intérieure du moule par mise en contact de la seconde surface de la couche centrale du film avec la surface de moulage intérieure du moule ;
à former un article plastique étiqueté dans le moule avec suffisamment de chaleur pour lier la couche thermosoudable du film à la surface externe de l'article plastique ;
à refroidir l'article plastique étiqueté, et
à retirer l'article plastique étiqueté du moule.

19. Article plastique étiqueté préparé conformément au procédé selon la revendication 18.

20. Procédé pour améliorer la maniabilité d'un film de surmoulage d'étiquette, consistant :
à former un film de surmoulage d'étiquette étant entendu que le film comprend une couche centrale et une couche thermosoudable, étant entendu que la couche centrale a une première et une seconde surface et que la couche thermosoudable a une surface interne et une surface externe, la surface interne de la couche thermosoudable recouvrant la première surface de la couche centrale, étant entendu que la couche thermosoudable comprend un polyéthylène à très basse densité, un polyéthylène à haute densité et au moins un copolymère d'alcène sélectionné parmi (i) un copolymère d'alcène et de vinylcarboxylate, (ii) un copolymère d'alcène et d'acide (méth)acrylique, (iii) un copolymère d'alcène et de (méth)acrylate d'alkyle, (iv) un métal alcalin ou un sel de zinc d'un copolymère d'alcène et d'acide (méth)acrylique, et (v) un mélange de deux ou davantage des copolymères d'alcène précédents.
